# EUROPEAN PATENT APPLICATION

(11) **EP 4 668 793 A1**
(43) Date of publication of application: **24.12.2025**
(21) Application number: 23931830.6
(22) Date of filing: 11.12.2023
(51) Int. Cl.: H04W 4/06

(54) **MULTICAST SERVICE CONFIGURATION METHOD AND APPARATUS**

(30) Priority: 04.04.2023 CN 202310369958
(71) Applicant: Honor Device Co., Ltd., Shenzhen, Guangdong 518040 (CN)
(72) Inventor: SHAN, Baokun, Shenzhen, Guangdong 518040 (CN)
(74) Representative: MERH-IP Matias Erny Reichl Hoffmann Patentanwälte PartG mbB
(86) International application number: PCT/CN2023/137831
(87) International publication number: WO 2024/207785

(57) **Abstract**

Embodiments of this application provide a configuration method and apparatus for a multicast service. The method includes: receiving a first message sent by a first network device, where the first message includes at least one set of first configuration information for transmission of a first multicast service; and receiving, based on the first message in an inactive state, the first multicast service sent by a second network device. The first message sent by the first network device is received in a connected state, and the at least one set of configuration information for transmission of the first multicast service by the second network device may be determined in the first message. Then, even if a terminal device moves in the inactive state, the terminal device may also receive, from a cell where the terminal device is located after moving, the first multicast service sent by the second network device corresponding to the cell. In this way, multicast service configuration the for the terminal device in the inactive state may be effectively implemented, and the terminal device in the inactive state may effectively receive a multicast service before and after moving.

## Description

This application claims priority to Chinese Patent Application No. 202310369958.7, filed with the China National Intellectual Property Administration on April 4, 2023 and entitled "CONFIGURATION METHOD AND APPARATUS FOR MULTICAST SERVICE", which is incorporated herein by reference in its entirety.

### TECHNICAL FIELD

This application relates to the field of communication technologies, and in particular, to a configuration method and apparatus for a multicast service.

### BACKGROUND

Multicast and broadcast (Multimedia Broadcast Multicast Service, MBMS) are communication modes that can save network resources, and the MBMS may support a broadcast mode and a multicast mode.

A terminal device that receives a broadcast service may operate in any RRC state. However, a terminal device that receives a multicast service needs to operate in an RRC connected state. Before receiving the multicast service, the terminal device needs to first determine configuration information for sending the multicast service by a network device. However, some terminal devices in an inactive state may also need to receive the multicast service, and the terminal devices in the inactive state may move, without being perceived by both an original serving base station and a target serving base station.

Therefore, how to effectively perform multicast service configuration in the inactive state has become an urgent problem to be resolved.

### SUMMARY

Embodiments of this application provide a configuration method and apparatus for a multicast service, applied to the field of communication technologies.

According to a first aspect, an embodiment of this application provides a configuration method for a multicast service, applied to a terminal device. The method includes:
receiving a first message sent by a first network device, where the first message includes at least one set of first configuration information for transmission of a first multicast service; and
receiving, based on the first message in an inactive state, the first multicast service sent by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the receiving, based on the first message, the first multicast service sent by a second network device includes:
determining target configuration information in at least one set of first configuration information included in the first message, where the target configuration information is first configuration information supported by the second network device for transmission of a first multicast service; and
receiving, based on the target configuration information, the first multicast service sent by the second network device.

In a possible design, the receiving, based on the target configuration information, the first multicast service sent by the second network device includes:
receiving first information sent by the second network device, where the first information is used to indicate whether the second network device supports a terminal device in an inactive state in receiving a multicast service; and
receiving, based on the target configuration information, the first multicast service sent by the second network device if the second network device supports the receiving of the multicast service by the terminal device in the inactive state.

In a possible design, the method further includes:
receiving second configuration information sent by the second network device, where the second configuration information is configuration information dedicated to the second network device.

In a possible design, the receiving, based on the target configuration information, the first multicast service sent by the second network device includes:
receiving, based on the target configuration information and the second configuration information, the first multicast service sent by the second network device.

According to a second aspect, an embodiment of this application provides a configuration method for a multicast service, applied to a first network device. The method includes:
sending a first message to a terminal device, where the first message includes at least one set of first configuration information for transmission of a first multicast service; and
the first message includes at least first configuration information for transmission of the first multicast service by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the method further includes:
broadcasting first information, where the first information is used to indicate whether the first network device supports a terminal device in an inactive state in receiving a multicast service.

In a possible design, the method further includes:
broadcasting second configuration information, where the second configuration information is configuration information dedicated to the first network device.

In a possible design, the method further includes:
receiving a second message sent by the second network device, where the second message includes at least one set of first configuration information for transmission of a second multicast service by the second network device.

In a possible design, the method further includes:
sending a third message to a second network device, where the third message includes at least one set of first configuration information for transmission of a third multicast service by the first network device.

According to a third aspect, an embodiment of this application provides a configuration apparatus for a multicast service. The apparatus includes:
a receiving module, configured to receive a first message sent by a first network device, where the first message includes at least one set of first configuration information for transmission of a first multicast service; and
the receiving module is further configured to receive, based on the first message in an inactive state, the first multicast service sent by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the receiving module is further configured to:
determine target configuration information in at least one set of first configuration information included in the first message, where the target configuration information is first configuration information supported by the second network device for transmission of a first multicast service; and
receive, based on the target configuration information, the first multicast service sent by the second network device.

In a possible design, the receiving module is further configured to:
receive first information sent by the second network device, where the first information is used to indicate whether the second network device supports a terminal device in an inactive state in receiving a multicast service; and
receive, based on the target configuration information, the first multicast service sent by the second network device if the second network device supports the receiving of the multicast service by the terminal device in the inactive state.

In a possible design, the receiving module is further configured to:
receive second configuration information sent by the second network device, where the second configuration information is configuration information dedicated to the second network device.

In a possible design, the receiving module is further configured to:
receive, based on the target configuration information and the second configuration information, the first multicast service sent by the second network device.

According to a fourth aspect, an embodiment of this application provides a configuration apparatus for a multicast service. The apparatus includes:
a sending module, configured to send a first message to a terminal device, where the first message includes at least one set of first configuration information for transmission of a first multicast service; and
the first message includes at least first configuration information for transmission of the first multicast service by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the sending module is further configured to:
broadcast first information, where the first information is used to indicate whether the first network device supports a terminal device in an inactive state in receiving a multicast service.

In a possible design, the sending module is further configured to:
broadcast second configuration information, where the second configuration information is configuration information dedicated to the first network device.

In a possible design, the apparatus further includes a receiving module.

The receiving module is configured to:
receive a second message sent by the second network device, where the second message includes at least one set of first configuration information for transmission of a second multicast service by the second network device.

In a possible design, the sending module is further configured to:
send a third message to a second network device, where the third message includes at least one set of first configuration information for transmission of a third multicast service by the first network device.

According to a fifth aspect, an embodiment of this application provides a terminal device. The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer with a wireless transceiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes a processor and a memory. The memory stores a computer-executable instruction. The processor is configured to perform the computer-executable instruction stored in the memory, so that the terminal device performs the method according to the first aspect.

According to a sixth aspect, an embodiment of this application provides a network device. The network device may be a base station (Base Transceiver Station, referred to as BTS for short) in a GSM system or a CDMA system, or may be a base station (NodeB, referred to as NB for short) in a WCDMA system, may further be an evolved base station (evolved NodeB, referred to as eNB for short), an access point (access point, AP), or a relay station in an LTE system, or may be a base station in a 5G system, or the like.

The network device includes a processor and a memory. The memory stores a computer-executable instruction. The processor is configured to perform the computer-executable instruction stored in the memory, so that the terminal device performs the method according to the second aspect.

According to a seventh aspect, an embodiment of this application provides a computer-readable storage medium. The computer-readable storage medium stores a computer program. The computer program, when executed by a processor, implements the method according to the first aspect and the second aspect.

According to an eighth aspect, an embodiment of this application provides a computer program product. The computer program product includes a computer program, the computer program, when run, causing a computer to perform the method according to the first aspect and the second aspect.

According to a ninth aspect, an embodiment of this application provides a chip. The chip includes a processor. The processor is configured to invoke a computer program in a memory to perform the method according to the first aspect and the second aspect.

This application provides a configuration method and apparatus for a multicast service, to implement multi-cell multicast service configuration for the terminal device in an inactive state, and the terminal device in the inactive state may effectively receive multicast services before and after movement.

### BRIEF DESCRIPTION OF DRAWINGS

FIG. 1 is a schematic diagram of a communication scenario according to an embodiment of this application;
FIG. 2 is a schematic flowchart of a broadcast service according to this application;
FIG. 3 is a schematic flowchart of a multicast service according to this application;
FIG. 4 is a schematic flowchart of receiving a multicast service by a terminal device in an inactive state according to an embodiment of this application;
FIG. 5 is a flowchart of a configuration method for a multicast service according to an embodiment of this application;
FIG. 6 is a schematic diagram of a correspondence between a first multicast service and first configuration information according to an embodiment of this application;
FIG. 7 is a schematic diagram I of an implementation of indication information according to an embodiment of this application;
FIG. 8 is a schematic diagram II of an implementation of indication information according to an embodiment of this application;
FIG. 9 is an interaction flowchart of a configuration method for a multicast service according to an embodiment of this application;
FIG. 10 is a schematic structural diagram I of a configuration apparatus for a multicast service according to an embodiment of this application;
FIG. 11 is a schematic structural diagram II of a configuration apparatus for a multicast service according to an embodiment of this application;
FIG. 12 is a schematic structural diagram of a terminal device according to an embodiment of this application; and
FIG. 13 is a schematic structural diagram of a network device according to an embodiment of this application.

### DESCRIPTION OF EMBODIMENTS

To better understand the technical solutions of this application, related concepts and related technologies involved in this application are described below.

Terminal device: The terminal device may be a device that includes a wireless transceiving function and that may cooperate with a network device to provide a communication service for a user. Specifically, the terminal device may be a user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an on-board device, a wearable device, or a terminal device in a future 5G network or a network after 5G.

Network device: The network device may be a device configured to communicate with a terminal device, for example, may be a base station (Base Transceiver Station, BTS) in a global system for mobile communication (Global System for Mobile Communication, GSM) or code division multiple access (Code Division Multiple Access, CDMA) communication system, or may be a base station (NodeB, NB) in a wideband code division multiple access (Wideband Code Division Multiple Access, WCDMA) system, and may further be an evolved base station (Evolutional Node B, eNB or eNodeB) in an LTE system, or the network device may be a relay station, an access point, an on-board device, a wearable device, a network side device in a future 5G network or a network after 5G, a network device in a future evolved public land mobile network (Public Land Mobile Network, PLMN) network, or the like.

The network device involved in embodiments of this application may also be referred to as a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved base station (Evolutional Node B, eNB) in a 4G system, and corresponds to a 5G system in a 5G system, for example, an access network device (for example, gNB, a centralized unit CU, and a distributed unit DU) in new radio (New Radio, NR).

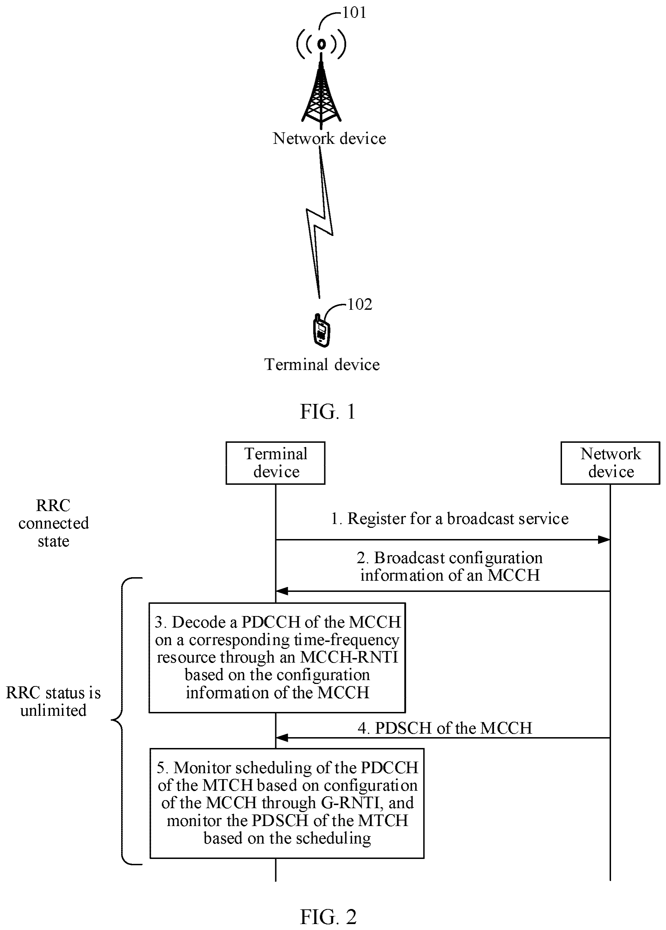

A scenario to which the configuration method for a multicast service in this application is applicable is described below with reference to FIG. 1.

FIG. 1 is a schematic diagram of a communication scenario according to an embodiment of this application. Referring to FIG. 1, a network device 101 and a terminal device 102 are included. The network device 101 and the terminal device 102 may perform wireless communication. The terminal device 102 may communicate with at least one core network through a radio access network (Radio Access Network, RAN).

The communication system may be a global system for mobile communications (Global System of Mobile communication, referred to as GSM for short), a code division multiple access (Code Division Multiple Access, referred to as CDMA for short) system, a wideband code division multiple access (Wideband Code Division Multiple Access, referred to as WCDMA for short) system, a long term evolution (Long Term Evolution, referred to as LTE for short) system, or a fifth generation mobile communication (5th-Generation, referred to as 5G for short) system.

Correspondingly, the network device may be a base station (Base Transceiver Station, referred to as BTS for short) in a GSM system or a CDMA system, or may be a base station (NodeB, referred to as NB for short) in a WCDMA system, may further be an evolved base station (evolved NodeB, referred to as eNB for short), an access point (access point, AP), or a relay station in an LTE system, or may be a base station in a 5G system, or the like. This is not limited herein.

The 5G mobile communication system in this application includes a non-standalone (non-standalone, NSA) 5G mobile communication system and/or a standalone (standalone, SA) 5G mobile communication system. The technical solutions provided in this application may be further applied to a future communication system, for example, a sixth generation mobile communication system. The communication system may further be a PLMN network, a device-to-device (device-to-device, D2D) network, a machine-to-machine (machine to machine, M2M) network, an IoT network, or another network.

It may be understood that if the technical solution in embodiments of this application is applied to another wireless communication network, a corresponding name may be replaced with a name of a corresponding function in another wireless communication network.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

In Rel-17, the 3GPP introduces features of multicast and broadcast (MBMS) of 5G. The MBMS is a communication mode that can save network resources. The MBMS of 5G supports two modes, that is, a broadcast (Broadcast) mode and a multicast (Multicast) mode.

Broadcast and multicast both belong to point-to-multipoint transmission, and a difference lies in that broadcast is transmission of information of all terminal devices, and multicast is transmission of information of terminal devices in a group. Generally, all terminal devices in a region can receive broadcast information, and only a terminal device in a corresponding group can receive multicast information.

In addition, in Rel-17, a terminal device receiving a broadcast service may operate in any RRC state, that is, may operate in any one of RRC_CONNECTED (an RRC connected state), RRC_IDLE (an RRC idle state), and RRC_INACTIVE (an RRC inactive state). For a broadcast service, a network device does not need to sense existence of these terminal devices. In this broadcast mode, a network device sends a broadcast service in a cell, and a terminal device operating in any state may receive the broadcast service as required.

However, for a multicast service, it is stipulated that only a terminal device in the RRC connected state can receive a service. A main reason is that the multicast mode is essentially a group scheduling transmission for a plurality of specific terminal devices. A network device needs to sense existence of a terminal device, perform same configuration for terminal devices in a same group, and then perform multicast transmission.

It may be determined based on the foregoing description that a multicast mode of Rel-17 supports only the RRC connected state. However, considering that some terminal devices in an inactive state do not have a requirement for a unicast service, the terminal devices probably need to receive multicast services. Therefore, 3GPP Rel-18 discussed and decided to introduce reception of a multicast service in the RRC_INACTIVE state.

However, to enable the terminal device to receive the multicast service in the RRC_INACTIVE state, many problems need to be resolved. For example, since a multicast service of Rel-17 is received in a connected state, the terminal device receives a multicast service only in a serving cell, and multicast configuration is also for the serving cell. However, the terminal device in the INACTIVE state may move, and an original serving base station does not sense the movement. Therefore, how to provide a multicast service configuration that may be used in a plurality of cells is an urgent problem to be resolved.

Based on the foregoing description, configurations and sending processes of the broadcast service and the multicast service are further described below.

First, the configuration and the sending process of the broadcast service are described with reference to FIG. 2. FIG. 2 is a schematic flowchart of a broadcast service according to this application.

As shown in FIG. 2, a general process of the broadcast service includes:
1. A terminal registers for a broadcast service.

In a current step, a terminal device may interact with a broadcast management network element of a core network, and mainly indicate that a network side terminal device is interested in some broadcast services. A network side determines whether a terminal device has the authority to receive, including whether to pay, and the like.

2. A network device sends configuration information of an MCCH (Multicast Control Channel, broadcast control channel) through system broadcast.

The system broadcast may be a SIB20 (System Information Block Type20, system information block 20). It should be noted that the system broadcast is not a broadcast service, but refers to some public configurations broadcast by a network device in a cell. The configuration information of the MCCH may include time-frequency resources used, a sending period, and the like.

3. The terminal device decodes a PDCCH (Physical Downlink Control Channel, physical downlink control channel) of the MCCH on a corresponding time-frequency resource through an MCCH-RNTI (Radio Network Temporary Identity, radio network temporary identifier) based on configuration information of the MCCH.

If the decoding succeeds, information included in the PDCCH may include three types of content:
- Scheduling information of a PDSCH (Physical Downlink Shared Channel, physical downlink shared channel) of the MCCH includes modulation and demodulation modes of the PDSCH, a specific time-frequency resource, and the like, so that a terminal device actually receives configuration content of the MCCH.
- The broadcast service starts indication. It indicates that a new broadcast service is about to start. If a broadcast service of a terminal device does not start currently, and the indication is received, the terminal needs to receive a subsequent PDSCH of an MCCH. On the contrary, it indicates that the broadcast service has not started yet, and the terminal device may decode only the current PDCCH instead of decoding the PDSCH, to achieve a power saving effect.
- Update indication for broadcast service configuration. It indicates that the broadcast service configuration sent in the MCCH has been updated. This is mainly aimed at a terminal device that has already started receiving a broadcast service. Although such a terminal device has a broadcast service configuration and is receiving the broadcast service, if the terminal device receives the indication, it means that the broadcast service configuration may change. Therefore, the terminal device further needs to receive a subsequent PDSCH of the MCCH. On the contrary, if no indication is received, it means that the current broadcast service configuration does not change, and the terminal device may continue to use the previous configuration to receive a service without receiving the PDSCH of the MCCH, so that the power saving effect may also be achieved.

4. If the terminal device needs to receive the PDSCH of the MCCH (mainly a new broadcast service is started, or the terminal device already receives the broadcast service but the PDCCH indicates that the broadcast service configuration may change), the terminal device decodes the PDSCH of the MCCH based on the scheduling information of the PDCCH of the MCCH in step 3.

The PDSCH of the MCCH is mainly a configuration of an MTCH (multicast data channel, Multicast Traffice Channel). The configuration of the MTCH may include an ID of a broadcast service, a scrambling code G-RNTI for receiving the broadcast service, time-frequency resource information of the MTCH corresponding to the broadcast service, and the like.

5. The terminal device monitors the scheduling PDCCH of the MTCH through the G-RNTI based on the MTCH configuration in the MCCH, and monitors the PDSCH of the MTCH based on the scheduling, that is, the broadcast service.

It may be determined with reference to FIG. 2 that for the foregoing described step 1, the terminal device needs to be in a connected state. However, for the foregoing described steps 2-5, no limitation is imposed on an RRC state of the terminal device, that is, the terminal device not only may be in the RRC_CONNECTED state of receiving a unicast service, but also may be in the RRC_IDLE and RRC_INACTIVE states without the unicast service. Because the network device broadcasts and sends a service in a cell, the network device does not need to sense existence of the terminal device.

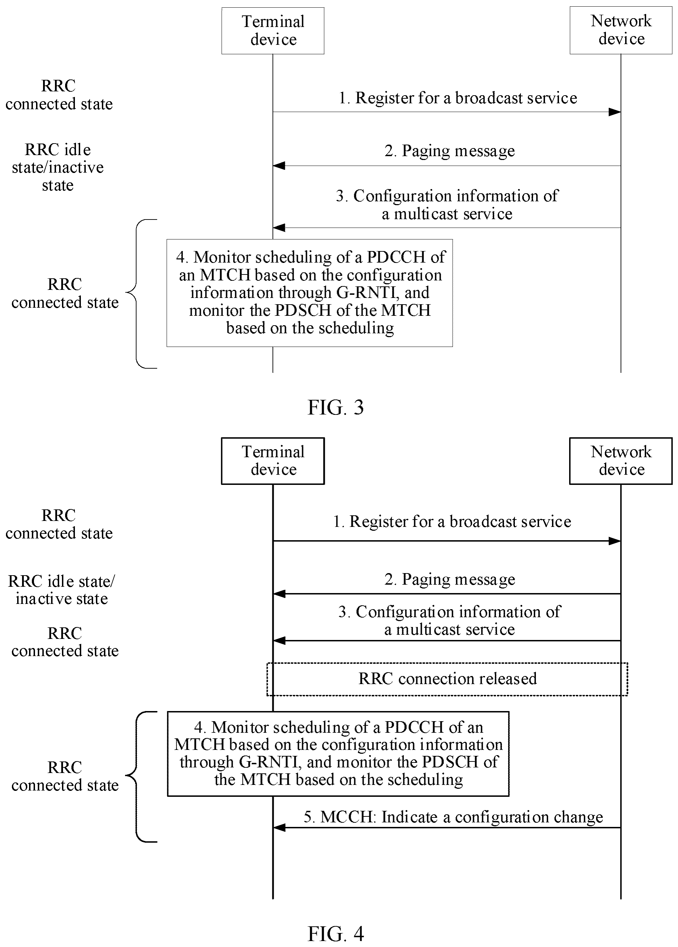

The configuration and the sending process of the multicast service are described below with reference to FIG. 3 again. FIG. 3 is a schematic flowchart of a multicast service according to this application.

As shown in FIG. 3, a general process of the multicast service includes:
1. A terminal device registers for a multicast service.

In a current step, a terminal device may interact with a management network element of a core network, and mainly indicate that a network side terminal device is interested in some multicast services. A network side determines whether a terminal device has the authority to receive, including whether to pay, and the like.

2. When a multicast service is about to start, the network device sends a specific paging message in a cell.

The specific paging message may carry a TMGI (TemporaryMobile Group Identity, temporary mobile group identity) of a multicast service. The network device may wake up a corresponding terminal device by sending the specific paging message in a cell.

3. After receiving the paging message, if the terminal device is interested in the multicast service, the terminal device initiates an RRC connection establishment process, and enters an RRC_CONNECTED state. In the RRC_CONNECTED state, the network device may send configuration information of the multicast service in the form of unicast information.

For example, the network device may send, to the terminal device through an RRCReconfiguration (RRC reconfiguration) message, configuration information for receiving the multicast service. If the multicast service configuration is updated, the message may also be sent for a plurality of times, to perform configuration update. The configuration content is mainly a configuration of an MTCH of a multicast service, for example, an ID of the multicast service, a scrambling code G-RNTI for receiving the multicast service, and time-frequency resource information of the MTCH corresponding to the multicast service.

4. The terminal device monitors the scheduling PDCCH of the MTCH through the G-RNTI based on the MTCH configuration in step 3, and monitors the PDSCH of the MTCH based on the scheduling, that is, the multicast service.

For the foregoing described steps 2-4, the terminal needs to be in the RRC_CONNECTED state. Because multicast essentially means that the network device performs group scheduling on a plurality of terminal devices that want to receive a same service, the network device needs to sense existence of the terminal device.

It may be determined based on the foregoing description that, in Rel-17, a comparison between a configuration sending manner, a service start notification manner, and a configuration update notification manner of broadcast and multicast transmission modes may be shown below in Table 1:

| | | |
|---|---|---|
| Service notification manner | In the DCI of the MCCH, 1bit indicates activation of a new service. The terminal device reads the MCCH, and obtains related configuration. | The paging carries the TMGI, to notify that a related service is about to start, and the terminal enters an RRC connected state and is ready to receive. |
| Configuration sending manner | It is a broadcast mode, that is, through a PDSCH of the MCCH. | Unicast manner: The terminal enters a connected state in response to the paging through the RRCReconfiguration. |
| Configuration update manner | In the DCI of the MCCH, 1bit indicates that an existing service configuration is updated. | RRCReconfiguration updated at any time |

The foregoing introduces an execution process of a broadcast service and a multicast service in Rel-17. Some processes discussed in Rel-18 for receiving a multicast service by a terminal device in an INACTIVE state are described below with reference to FIG. 4 again. FIG. 4 is a schematic flowchart of receiving a multicast service by a terminal device in an inactive state according to an embodiment of this application.

As shown in FIG. 4, the method includes:
1. A terminal device registers for a multicast service.

In a current step, a terminal device may interact with a management network element of a core network, and mainly indicate that a network side terminal device is interested in some multicast services. A network side determines whether a terminal device has the authority to receive, including whether to pay, and the like.

2. When a multicast service is about to start, the network device sends a specific paging message in a cell.

The specific paging message may carry a TMGI (Temporary Mobile Group Identity, temporary mobile group identity) of a multicast service. The network device may wake up a corresponding terminal device by sending the specific paging message in a cell.

3. After receiving the paging message, if the terminal device is interested in the multicast service, the terminal device initiates an RRC connection establishment process, and enters an RRC_CONNECTED state. In the RRC_CONNECTED state, the network device may send configuration information of the multicast service in the form of unicast information.

For example, the network device may send, to the terminal device through an RRCReconfiguration (RRC reconfiguration) message, configuration information for receiving the multicast service. If the multicast service configuration is updated, the message may also be sent for a plurality of times, to perform configuration update. The configuration content is mainly a configuration of an MTCH of a multicast service, for example, an ID of the multicast service, a scrambling code G-RNTI for receiving the multicast service, and time-frequency resource information of the MTCH corresponding to the multicast service.
4. After receiving the configuration information of the multicast service, the terminal device may release an RRC connection and enter an RRC inactive state.
5. In the RRC inactive state, the terminal device monitors the scheduling PDCCH of the MTCH through the G-RNTI based on the MTCH configuration in step 3, and monitors the PDSCH of the MTCH based on the scheduling, that is, the multicast service.
6. The network device may further instruct configuration update of the multicast service through the MCCH.

For the foregoing described steps 2-4, the terminal needs to be in the RRC_CONNECTED state. Because multicast essentially means that the network device performs group scheduling on a plurality of terminal devices that want to receive a same service, the network device needs to sense existence of the terminal device.

It may be determined based on the foregoing description that after the terminal device receives, in the RRC connected state, the multicast service configuration sent by the network device, the network device may release the RRC connection, so that the terminal device enters the inactive state. In the inactive state, the terminal device may receive the multicast service through the previously received multicast service configuration.

It may be determined based on the foregoing described content that in R17, the multicast service is used only in a connected state. Therefore, the configurations are all valid in a connected cell, and no mobility problem occurs.

However, the multicast service in R18 supports an inactive state. In the inactive state, the terminal device may move. Therefore, there is a requirement for configuring multi-cell multicast service configuration. Currently, no related design is proposed for how to configure a multi-cell multicast configuration for the inactive state and how to enable a terminal device to continue receiving a multicast service after movement.

In a possible implementation, one of two schemes of multiplexing R17 may be considered, but the multiplexing may have some problems. The two schemes of multiplexing and the corresponding problems are described below.

Scheme 1 (similar to a broadcast scheme): After switching a cell, the terminal device receives a multicast service configuration in a new cell based on the configuration of the MCCH.

However, in this implementation scheme, a broadcast mode is adopted after a cell is changed, the terminal device needs to dynamically update the MCCH in a broadcast manner, and the network device also needs to perform unified multicast configuration in all cells. No more flexibility gains are from multicast.

Scheme 2 (similar to a multicast scheme): After switching a cell, the terminal device initiates an RRC connection resume request in the new cell, and re-obtains a multicast service configuration of the new cell.

A disadvantage of this manner lies in that an RRC connection needs to be established for cell switching, which causes relatively great power consumption and resource consumption.

For the technical problem described above, this application provides a configuration solution for a multicast service. A multicast service configuration supporting a multi-cell configuration can allow an INACTIVE terminal to receive a multicast service in a plurality of cells by using multicast service configuration sent by a source cell, to avoid a case that the terminal device needs to re-obtain the multicast service configuration after moving a cell, to implement a multi-cell configuration for a multicast service in an inactive state, so that the terminal device in the inactive state may also receive the multicast service as required after switching a cell.

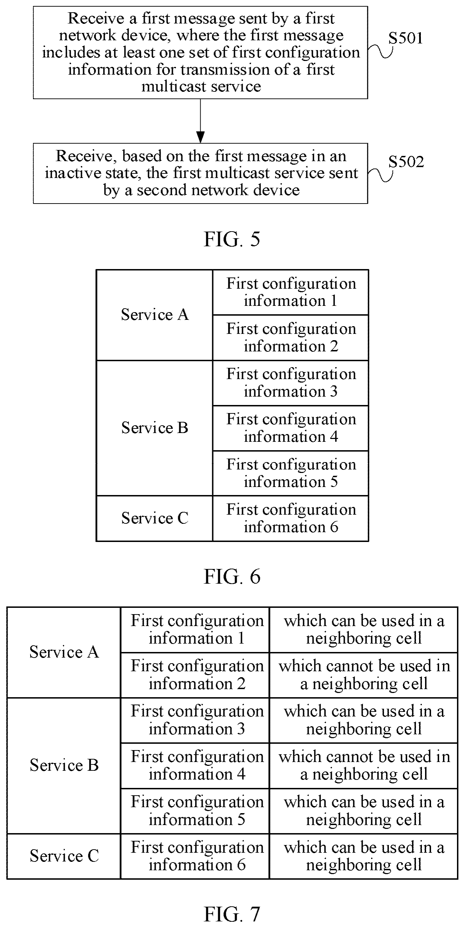

A description is provided below with reference to specific embodiments. Implementation on a terminal device side is first described. FIG. 5 is a flowchart of a configuration method for a multicast service according to an embodiment of this application.

As shown in FIG. 5, the method includes:
S501: Receive a first message sent by a first network device, where the first message includes at least one set of first configuration information for transmission of a first multicast service.

In this embodiment, a terminal device may receive the first message sent by the first network device. In a possible implementation, the terminal device may receive, in an RRC connected state, the first message sent by the first network device through unicast signaling. The first network device may be understood as a source network device to which the terminal device is connected.

The first message may include at least one set of first configuration information for transmission of the first multicast service. The first multicast service in this embodiment is a multicast service that the terminal device is interested in and needs receive. Therefore, one or more first multicast services may be configured. This is not limited in this embodiment. A specific quantity and content of first multicast services may be determined based on an actual requirement.

In a possible implementation, the at least one set of first configuration information included in the first message may include at least first configuration information supported by a second network device for transmission of the first multicast service. The second network device may be a network device corresponding to a cell in which the terminal device is located after moving.

It may be understood that the following two cases may exist for movement of the terminal device:
Case 1: A source cell before the terminal device moves and a target cell after the terminal device moves correspond to a same network device.

In this case, the second network device and the first network device are the same device.

Case 2: The source cell before the terminal device moves and the cell after the terminal device moves correspond to different network devices.

In this case, the second network device is a network device other than the first network device.

Regardless of which of the foregoing cases, the at least one set of first configuration information included in the first message is set to include at least the first configuration information for transmission of the first multicast service by the second network device, so that after moving to a new cell in the inactive state, the terminal device may also determine the first configuration information for sending the first multicast service by the second network device, thereby effectively receiving the first multicast service in the inactive state.

S502: Receive, based on the first message in an inactive state, the first multicast service sent by a second network device.

After receiving the first message sent by the first network device, the terminal device may, for example, release an RRC connection and enter an inactive state. Although the terminal device enters the inactive state, the terminal device may determine, by receiving the first message, that the second network device sends the first configuration information of the first multicast service, and therefore may receive, in the inactive state, the first multicast service sent by the second network device, thereby effectively implementing the multicast service configuration for the terminal device in the inactive state.

The configuration method for a multicast service provided in embodiments of this application includes: receiving a first message sent by a first network device, where the first message includes at least one set of first configuration information for transmission of a first multicast service; and receiving, based on the first message in an inactive state, the first multicast service sent by a second network device. The first message sent by the first network device is received in a connected state, and the at least one set of configuration information for transmission of the first multicast service by the second network device may be determined in the first message. Then, even if a terminal device moves in the inactive state, the terminal device may also receive, from a cell where the terminal device is located after moving, the first multicast service sent by the second network device corresponding to the cell. In this way, multicast service configuration the for the terminal device in the inactive state may be effectively implemented, and the terminal device in the inactive state may effectively receive a multicast service before and after moving.

Based on the foregoing description, the first multicast service and the first configuration information in the first message are further described in detail below.

In this application, one or more first multicast services may be configured, where an implementation of each first multicast service is similar. Each first multicast service may correspond to at least one set of first configuration information. In other words, a relationship between the first multicast service and the first configuration information may be one-to-one or one-to-many. The two cases are respectively described below.

In a possible implementation, the first multicast service corresponds to one set of first configuration information, where each set of first configuration information is associated with a service identifier of a corresponding first multicast service. In other words, in a one-to-one case, the first configuration information may be identified through the service identifier of the corresponding first multicast service.

The service identifier of the first multicast service may be, for example, the TMGI described above, or may be any information used to uniquely identify the first multicast service. A specific implementation of the service identifier is not limited in this embodiment.

The current case may be understood with reference to FIG. 6. FIG. 6 is a schematic diagram of a correspondence between a first multicast service and first configuration information according to an embodiment of this application.

As shown in FIG. 6, it is assumed that the first message currently includes first configuration information respectively corresponding to 3 first multicast services. The 3 first multicast services in FIG. 6 are respectively a multicast service A, a multicast service B, and a multicast service C. The multicast service C corresponds to only one set of first configuration information 6, and this set of first configuration information 6 is associated with a service identifier of the corresponding multicast service C.

Referring to FIG. 6, the multicast service C corresponds to the first configuration information 6, where the first configuration information 6 is associated with a service identifier of the multicast service C. It may also be understood that the first configuration information 6 is identified though the service identifier of the multicast service C. For example, the first configuration information 6 shown in FIG. 6 may be determined based on the service identifier of the multicast service C.

The one-to-one case between the first configuration information and the first multicast service may be as follows. Both a first network device and at least one second network device support transmission of the first multicast service through the single first configuration information. In this case, the terminal device may obtain, from the first message, first configuration information supported by the second network device for transmission of the first multicast service.

In another possible implementation, the first multicast service corresponds to a plurality of sets of first configuration information. In this case, the service identifier of the multicast service cannot distinguish the first configuration information. Therefore, for many-to-one first configuration information, a configuration information identifier cannot be separately set again, to ensure that each set of first configuration information may be distinguished.

Therefore, in the current case, each set of first configuration information is associated with a respective configuration information identifier, that is, each set of first configuration information is identified through a respective corresponding configuration information identifier. The specific implementation of the configuration information identifier may be selected based on an actual requirement, as long as unique identification for each set of first configuration information may be implemented.

The current case may be understood still with reference to FIG. 6. As shown in FIG. 6, it is assumed that the first message currently includes first configuration information respectively corresponding to 3 first multicast services. The 3 first multicast services in FIG. 6 are respectively a multicast service A, a multicast service B, and a multicast service C. The multicast service A and the multicast service B both correspond to a plurality of sets of first configuration information, and each set of first configuration information is associated with a respective configuration information identifier.

Referring to FIG. 6, the multicast service A corresponds to first configuration information 1 and first configuration information 2, where the first configuration information 1 and the first configuration information 2 are both associated with respective corresponding configuration information identifiers. It may also be understood that the first configuration information 1 and the first configuration information 2 are both identified through respective configuration information identifiers. For example, the first configuration information 1 shown in FIG. 6 may be determined based on the configuration information identifier of the first configuration information 1. "1", "2", and the like shown in FIG. 6 represent configuration information identifiers.

In addition, the multicast service B corresponds to first configuration information 3, first configuration information 4, and first configuration information 5. The three pieces of first configuration information are also associated with respective corresponding configuration information identifiers.

The many-to-one case between the first configuration information and the first multicast service may be as follows. A plurality of sets of first configuration information corresponding to the first multicast service include at least one set of first configuration information supported by the first network device and/or at least one set of first configuration information supported by the second network device. In this case, the terminal device may obtain, from the first message, the first configuration information supported by the second network device for transmission of the first multicast service.

It may be determined with reference to the description in FIG. 6 that the first message includes at least one set of first configuration information for transmission of the first multicast service. Each first multicast service may correspond to at least one set of first configuration information. When the first multicast service corresponds to one set of first configuration information, the first configuration information may be distinguished though the service identifier. When the first multicast service corresponds to a plurality of sets of first configuration information, the first configuration information may be distinguished through the configuration information identifier. Through such settings, it may be ensured that each first multicast service in the first message corresponds to one or more sets of first configuration information, so that the one or more sets of first configuration information corresponding to each network device may be provided to the terminal device based on an actual configuration status of each network device for transmission of the first multicast service, and the terminal device may determine, from the first message, the first configuration information supported by the second network device for transmission of the first multicast service.

It may be determined based on the foregoing description that each first multicast service in the first message corresponds to at least one set of first configuration information, and each set of first configuration information may be uniquely identified. Therefore, the first configuration information supported by a plurality of network devices may be provided to the terminal device. However, on this basis, the terminal device further needs to be informed of a specific cell in which each piece of first configuration information can be used, so that the terminal device may determine to receive the multicast service through which specific set of first configuration information in a corresponding cell.

Therefore, in a possible implementation, the first message in this embodiment further includes indication information corresponding to at least one set of first configuration information, where the indication information is used to indicate whether the first configuration information can be used in a neighboring cell of the first network device.

It may be understood that the neighboring cell of the first network device described herein is a relative concept. For example, each network device may have a neighboring cell list, and a cell located in the neighboring cell list is the neighboring cell of the first network device. Alternatively, a specific manner of determining the neighboring cell may be further determined based on an actual requirement.

The indication information may be described below with reference to FIG. 7. FIG. 7 is a schematic diagram I of an implementation of indication information according to an embodiment of this application.

As shown in FIG. 7, in a first message, each set of first configuration information is configured with respective corresponding indication information. The indication information may indicate that the first configuration information can be used in a neighboring cell of a first network device, or cannot be used in the neighboring cell of the first network device.

Referring to FIG. 7, for a multicast service A, it is assumed that the indication information indicates that first configuration information 1 can be used in a neighboring cell and indicates that second configuration information 2 cannot be used in the neighboring cell. A terminal device may use the first configuration information 1 to receive a multicast service A in a neighboring cell. For example, if a cell corresponding to a second network device is a neighboring cell of the cell corresponding to the first network device, the first configuration information 1 may be used to receive the multicast service A sent by the second network device.

For another example, for a multicast service B shown in FIG. 7, it is assumed that the indication information indicates that first configuration information 3 and first configuration information 5 can be used in a neighboring cell, and first configuration information 4 cannot be used in the neighboring cell. Then the terminal device may receive the multicast service B in the neighboring cell by using any one set of the first configuration information 3 and the first configuration information 5. When the terminal device may use a plurality of sets of first configuration information, a specific set to be selected may be determined according to specific implementation.

For another example, for a multicast service C shown in FIG. 7, it is assumed that the indication information indicates that first configuration information 6 can be used in the neighboring cell, and then the terminal device may receive the multicast service C in the neighboring cell by using the first configuration information 6. However, a case still exists. It is assumed that the indication information indicates that the first configuration information 6 cannot be used in the neighboring cell, and the terminal device does not need to receive, from the neighboring cell, first configuration information that may be used by the multicast service C. Therefore, the terminal device cannot receive the multicast service C from the neighboring cell.

A possible implementation of the indication information is described above. In other words, the indication information directly indicates whether the first configuration information can be used in a neighboring cell of the first network device. Alternatively, in another possible implementation, the indication information may include a cell list, or it may be understood that the indication information is a cell list. A corresponding cell list exists in each piece of first configuration information, and the cell list may include a cell identifier supporting the first configuration information.

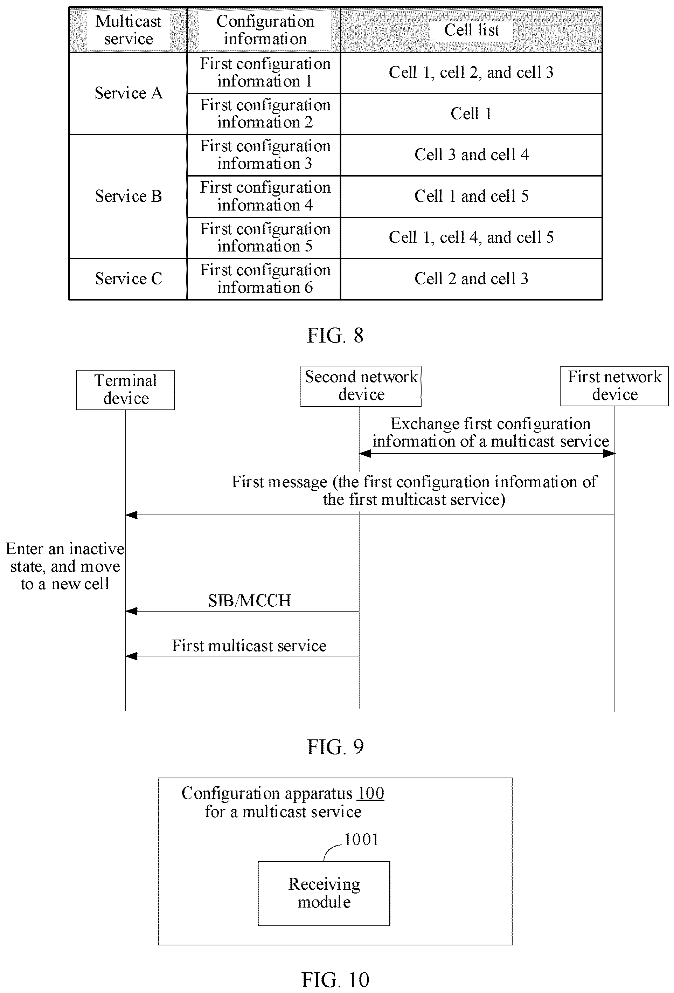

For example, it may be understood with reference to FIG. 8. FIG. 8 is a schematic diagram II of an implementation of indication information according to an embodiment of this application.

A cell list set for first configuration information 1 corresponding to a service A includes a cell 1, a cell 2, and a cell 3, and a cell list set for first configuration information 2 corresponding to the service A includes the cell 1. For example, if the terminal device moves to the cell 2 in an inactive state, the terminal device may receive, through the first configuration information 1, a service A sent by a corresponding second network device.

Still referring to FIG. 8, it is assumed that a cell list set for first configuration information 3 corresponding to a service B includes the cell 3 and a cell 4, a cell list set for first configuration information 4 corresponding to the service B includes the cell 1 and a cell 5, and a cell list set for first configuration information 5 corresponding to the service B includes the cell 1, the cell 4, and the cell 5. For example, if the terminal device moves to the cell 4 in an inactive state, the terminal device may receive, by using the first configuration information 3 or the first configuration information 5, the service B sent by the corresponding second network device.

Still referring to FIG. 8, it is assumed that a cell list set for first configuration information 6 corresponding to a service C includes a cell 2 and a cell 3. For example, if the terminal device moves to the cell 2 in an inactive state, the terminal device may receive, through the first configuration information 6, a service B sent by a corresponding second network device.

Therefore, in this embodiment, corresponding indication information for each set of first configuration information is set in the first message, so that the terminal device may determine a specific set of configuration information to be used in a corresponding cell to receive the first multicast service sent by the second network device.

It may be determined based on the foregoing description that in the first message, each first multicast service may correspond to at least one set of first configuration information, and the first message further includes indication information, so that the terminal device may determine target configuration information in the at least one set of first configuration information included in the first message. The target configuration information is the first configuration information supported by the second network device for transmission of the first multicast service. Then the terminal device may receive, based on the target configuration information, the first multicast service sent by the second network device. The target configuration information herein is determining a piece of corresponding target configuration information for each first multicast service.

It may be understood that because the terminal device determines a serving cell, but does not determine a specific network device, a serving cell that can use the first configuration information is indicated in the indication information. Based on this, the target configuration information in this embodiment may further be understood as the first configuration information supported by the cell corresponding to the second network device.

The content described above may be further summarized herein. An implementation of determining target configuration information for a certain first multicast service may include following four cases:
Case 1: In a first message, a first multicast service corresponds to one set of first configuration information, and indication information indicates that the set of first configuration information may be used in a neighboring cell.

In this case, if the set of first configuration information may be used in the serving cell corresponding to the second network device, it may be determined that the second network device (or the corresponding cell) supports the set of first configuration information. Therefore, the set of first configuration information may be determined as target configuration information corresponding to the first multicast service.

Case 2: In a first message, a first multicast service corresponds to one set of first configuration information, and indication information indicates a cell list corresponding to the set of first configuration information.

In this case, if the cell list corresponding to the set of first configuration information includes the serving cell corresponding to the second network device, it may be determined that the second network device (or the corresponding cell) supports the set of first configuration information. Therefore, the set of first configuration information may be determined as target configuration information corresponding to the first multicast service.

Case 3: In a first message, a first multicast service corresponds to a plurality of sets of first configuration information, and indication information corresponding to each set of first configuration information may indicate whether the first configuration information may be used in a neighboring cell.

In this case, if a certain set of first configuration information may be used in the serving cell corresponding to the second network device, it may be determined that the second network device (or the corresponding cell) supports the set of first configuration information. Therefore, the set of first configuration information may be determined as target configuration information corresponding to the first multicast service. If a plurality of sets of first configuration information satisfying a current condition exist, one set may be selected from the plurality of sets of first configuration information for use.

Case 4: In a first message, a first multicast service corresponds to a plurality of sets of first configuration information, and indication information corresponding to each set of first configuration information indicates a cell list corresponding to the first configuration information.

In this case, if a cell list corresponding to a certain set of first configuration information includes the serving cell corresponding to the second network device, it may be determined that the second network device (or the corresponding cell) supports the set of first configuration information. Therefore, the set of first configuration information may be determined as target configuration information corresponding to the first multicast service. If a plurality of sets of first configuration information satisfying a current condition exist, one set may be selected from the plurality of sets of first configuration information for use.

In a possible implementation, the first configuration information described above is configuration information that may be exchanged or reserved between a plurality of network devices, and may also be understood as public configuration information. However, some configuration information that is not convenient for exchange or synchronization between various network devices may further exist. In this embodiment, this part of configuration information is referred to as second configuration information. The second configuration information may be understood as configuration information dedicated to the second network device. For example, the second configuration information may include frequency information, such as CFR-Config (Common Frequency Resource-Config, common frequency resource configuration). Specific content in the second configuration information may be set based on an actual requirement.

Therefore, after moving to the serving cell corresponding to the second network device, the terminal device may further receive the second configuration information sent by the second network device through broadcasting.

Then, when receiving the first multicast service sent by the second network device, the terminal device may receive, based on the foregoing determined target configuration information and the second configuration information received through broadcast signaling, the first multicast service sent by the second network device.

It may be understood that a combination of the target configuration information and the second configuration information is the configuration information used by the second network device for transmission of the first multicast service. In a manner of broadcasting and sending the second configuration information dedicated to the second network device, it may be ensured that the terminal device receives complete configuration information for transmission of the first multicast service by the second network device.

In an optional implementation, the network device further broadcasts first information, where the first information is used to indicate whether the network device supports a terminal device in an inactive state in receiving a multicast service. For example, after moving to the serving cell corresponding to the second network device, the terminal device may receive first information sent by the second network device. A plurality of different implementations of the first information are respectively described below.

In an implementation, the first information directly indicates whether the second network device supports a terminal device in an inactive state in receiving a multicast service.

In this implementation, the first information does not indicate a certain specific multicast service, but indicates a characteristic of whether the second network device supports the terminal device in an inactive state in receiving the multicast service. If the first information indicates that the second network device supports the terminal device in the inactive state in receiving the multicast service, the terminal device further receives, based on the target configuration information and the second configuration information described above, the first multicast service sent by the second network device. Alternatively, if the first information indicates that the second network device does not support the terminal device in the inactive state in receiving the multicast service, the terminal device cannot receive, in the inactive state, the first multicast service sent by the second network device.

In another implementation, the first information indicates whether the second network device supports the terminal device in an inactive state in receiving a multicast service, and the multicast service indicated in the first information is indicated through a service identifier.

In this implementation, the first information indicates whether the second network device supports the terminal device in the inactive state in receiving some specific multicast services, for example, for a certain first multicast service (a multicast service A is used as an example) that the terminal device currently needs to receive, it is assumed that the multicast services indicated in the first information include a multicast service having a service identifier of A.

If the first information indicates that the second network device supports the terminal device in the inactive state in receiving the multicast service A, the terminal device may receive, based on the target configuration information and the second configuration information described above, the first multicast service sent by the second network device. Alternatively, if the first information indicates that the second network device does not support the terminal device in the inactive state in receiving the multicast service A, the terminal device cannot receive, in the inactive state, the first multicast service sent by the second network device.

In another implementation, the first information indicates whether the second network device supports the terminal device in an inactive state in receiving a multicast service, and the multicast service indicated in the first information is indicated through a corresponding configuration information identifier.

In this implementation, the first information indicates whether the second network device supports the terminal device in the inactive state in receiving some specific services through specific first configuration information. For example, for a certain first multicast service (a multicast service A is used as an example) that the terminal device currently needs to receive, it is assumed that the multicast services indicated in the first information include a multicast service whose corresponding configuration information identifier is 1.

For example, for a certain first multicast service (a multicast service A is used as an example) that the terminal device currently needs to receive, the target configuration information is determined as first configuration information 1. If the first information indicates that the second network device supports the terminal device in the inactive state in receiving the multicast service A through the first configuration information 1, the terminal device may receive, based on the target configuration information and the second configuration information described above, the first multicast service sent by the second network device. Alternatively, if the first information indicates that the second network device does not support the terminal device in the inactive state in receiving the multicast service A through the first configuration information 1, the terminal device cannot receive, in the inactive state, the first multicast service sent by the second network device, or the terminal device needs to redetermine the target configuration information other than the first configuration information 1 to receive the first multicast service sent by the second network device.

In this embodiment, the terminal device may receive the first information sent by the second network device in a broadcast manner, to determine whether the second network device supports the terminal device in the inactive state in receiving the multicast service, or determine whether the second network device supports the terminal device in the inactive state in receiving the first multicast service, or determine whether the second network device supports the terminal device in the inactive state in receiving the first multicast service based on specific first configuration information. When it is determined that the second network device allows the terminal device to receive the first multicast service, the terminal device receives, based on the target configuration information and/or the second configuration information, the first multicast service sent by the second network device. Because the multicast service configuration of the second network device may change, through such an implementation, after the target configuration information is determined, it may be further determined whether the first multicast service sent by the second network device may be received through the target configuration information, so that authentication may be performed once again before the first multicast service is received, to effectively ensure validity of the receiving action and avoid performing an invalid receiving action, thereby achieving a goal of saving power to some extent.

The corresponding actions on the terminal device side described in the foregoing embodiments are similar to those in the implementations on the network device side. The first network device is used as an example, where the first network device may send the first message to the terminal device, and various implementations in the first message are similar to those described above. Details are not described herein again.

Moreover, the second network device further sends the first multicast service based on the first configuration information supported by the second network device, so that the terminal device may receive the first multicast service based on the target configuration information. The second network device further broadcasts the first information and the second configuration information. For specific information content sent by the first network device and the second network device to the terminal device, reference may be made to the description of the foregoing embodiment, and details are not described herein again.

On this basis, it should be further noted that the first message sent by the first network device to the terminal device includes at least one set of configuration information of the first multicast service, where the first message includes at least one set of first configuration information for transmission of the first multicast service by the second network device. Therefore, the first network device at least needs to determine that the second network device transmits the first configuration information of the first multicast service, and then can send corresponding information through the first message. Similar for any network device, the first network device needs to send, through the first information, first configuration information for transmission of a first multicast service by a certain network device, and then at least needs to determine, before sending the first information, the first configuration information for transmission of the first multicast service by the network device.

Therefore, in a possible implementation, a plurality of network devices may exchange first configuration information for respective transmission of multicast services. For any network device, the first configuration information for transmission of a multicast service sent by the network device includes at least one set of first configuration information of at least one multicast service supported by the network device.

For example, the first network device may receive a second message sent by the second network device, and the second message includes at least one set of first configuration information for transmission of a second multicast service by the second network device.

The second multicast service is a multicast service supported by the second network device, or the second multicast service is a multicast service to be transmitted by the second network device. Assuming that the second network device is to transmit a multicast service A, a multicast service B, and a multicast service C, the second message may include at least one set of first configuration information for transmission of the multicast service A by the second network device, at least one set of first configuration information for transmission of the multicast service B by the second network device, and at least one set of first configuration information for transmission of the multicast service C by the second network device. The first configuration information in the second message is all the first configuration information supported by the second network device for transmission of the second multicast service.

Similar to the foregoing introduction, in the second message, each second multicast service corresponds to at least one set of first configuration information. In an implementation, the second multicast service corresponds to one set of first configuration information, and each set of first configuration information is associated with a service identifier of a corresponding second multicast service. In another implementation, the second multicast service corresponds to a plurality of sets of first configuration information, and each set of first configuration information is associated with a respective configuration information identifier.

The first network device may effectively determine, by receiving the second message sent by the second network device, at least one set of first configuration information used by the second network device for transmission of the second multicast service supported by the second network device, so that the first configuration information supported by the second network device for the first multicast service may be subsequently added to the first message and provided to the terminal device. It may be understood that the first multicast service described above is a multicast service that the terminal device needs to receive. The second multicast service herein is a multicast service that the second network device is to transmit. Therefore, the second multicast service and the first multicast service may overlap.

Moreover, the first network device may further send a third message to the second network device. The third message includes at least one set of first configuration information for transmission of a third multicast service by the first network device.

The third multicast service is a multicast service supported by the first network device, or the third multicast service is a multicast service to be transmitted by the first network device. Assuming that the first network device is to transmit a multicast service A, a multicast service B, and a multicast service D, the third message may include at least one set of first configuration information for transmission of the multicast service A by the first network device, at least one set of first configuration information for transmission of the multicast service B by the first network device, and at least one set of first configuration information for transmission of the multicast service D by the first network device. The first configuration information in the third message is all the first configuration information supported by the first network device for transmission of the third multicast service.

Similar to the foregoing introduction, in the third message, each third multicast service corresponds to at least one set of first configuration information. In an implementation, the third multicast service corresponds to one set of first configuration information, and each set of first configuration information is associated with a service identifier of a corresponding third multicast service. In another implementation, the third multicast service corresponds to a plurality of sets of first configuration information, and each set of first configuration information is associated with a respective configuration information identifier.

The first network device may effectively synchronize, to the second network device by sending the third message to the second network device, the at least one set of first configuration information used by the first network device for transmission of the third multicast service supported by the first network device, so that the second network device may also send the first message to the terminal device connected to the second network device subsequently, thereby adding the first configuration information supported by the first network device for the first multicast service to the first message and providing the first message to the terminal device. It may be understood that the first multicast service described above is a multicast service that the terminal device needs to receive. The third multicast service herein is a multicast service that the first network device is to transmit. Therefore, the third multicast service and the first multicast service may overlap.

The foregoing content merely describes implementation of the first configuration information for interactive transmission of the multicast service between the first network device and the second network device. However, it may be understood that in an actual implementation process, any two network devices of a plurality of network devices both exchange the first configuration information for respective transmission of the multicast service with each other, so that no matter which network device is connected to the terminal device, first configuration information for transmission of the first multicast service by the remaining network devices may be determined by receiving the first message, and then in the inactive state, the terminal device may receive the multicast service as required when moving to any cell, thereby effectively implementing the multicast service configuration in the inactive state.

Based on all the content described in the foregoing embodiments, the first configuration information and/or the second configuration information in this embodiment may be configuration information of the MSCH, or may be configuration information of the MCCH. This is not specifically limited in this embodiment.

For example, the foregoing content may be understood with reference to FIG. 9. FIG. 9 is an interaction flowchart of a configuration method for a multicast service according to an embodiment of this application.

As shown in FIG. 9, a first network device and a second network device may exchange first configuration information of respective multicast services with each other.

In an implementation, a network device exchanges the first configuration information of the multicast service, for example, may perform interaction in an Xn interface establishment process, and for example, carry the multicast service configuration in an XN SETUP REQUEST/RESPONSE message (XN setup request/response message), or may also perform interaction in a RAN configuration update process, and for example, carry the multicast service configuration in an NG-RAN NODE CONFIGURATION UPDATE (ACKNOWLEDGE) message (a radio access network node configuration update (acknowledge) message). In an actual implementation process, a specific execution moment for exchanging the first configuration information and a specific message for exchanging the first configuration information may be selected and set based on actual requirements.

Then the first network device may send, to the terminal device through unicast signaling, at least one set of first configuration information for transmission of the first multicast service. Then it is assumed that the terminal device enters an inactive state and moves to a new serving cell, and it is assumed that the new serving cell corresponds to the second network device.

Referring to FIG. 9, the second network device may, for example, send, through the SIB/MCCH, second configuration information described above and/or the first information indicating whether the second network device supports a terminal device in an inactive state in receiving a multicast service.

The terminal device may determine, based on the second configuration information, a multicast service configuration dedicated to the second network device, and may determine, based on the first information, whether the second network device supports a corresponding multicast service and/or multicast service configuration.

Because the first message includes at least the first configuration information for transmission of the first multicast service by the second network device, even if in an inactive state, the terminal device may also determine the first configuration information supported by the second network device without establishing a connection with the second network device, thereby avoiding relatively great power consumption and resource consumption as a result of frequently initiating connection establishment to obtain a new multicast service configuration.

In a case that it is determined that the second network device supports a corresponding multicast service and/or multicast service configuration, the first multicast service sent by the second network device may be received based on the target configuration information and/or the second configuration information.

In addition, a configuration information identifier at a next level of a service identifier is introduced in this embodiment, thereby supporting configuring different multicast configurations for an INACTIVE terminal device in a same cell for a same multicast service, to maintain an advantage of resource flexibility of the multicast service in the INATIVE.

The configuration method for a multicast service of embodiments of this application has been described above. The apparatus provided in embodiments of this application for performing the foregoing configuration method for a multicast service is described below. It may be understood by a person skilled in the art that the method and the apparatus may be combined with or refer to each other. The related apparatus provided in embodiments of this application may perform the steps in the foregoing configuration method for a multicast service.

FIG. 10 is a schematic structural diagram I of a configuration apparatus for a multicast service according to an embodiment of this application. As shown in FIG. 10, the apparatus 100 includes a receiving module 1001.

The receiving module 1001 is configured to receive a first message sent by a first network device, where the first message includes at least one set of first configuration information for transmission of a first multicast service.

The receiving module 1001 is further configured to receive, based on the first message in an inactive state, the first multicast service sent by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the receiving module 1001 is further configured to:
determine target configuration information in at least one set of first configuration information included in the first message, where the target configuration information is first configuration information supported by the second network device for transmission of a first multicast service; and
receive, based on the target configuration information, the first multicast service sent by the second network device.

In a possible design, the receiving module 1001 is further configured to:
receive first information sent by the second network device, where the first information is used to indicate whether the second network device supports a terminal device in an inactive state in receiving a multicast service; and
receive, based on the target configuration information, the first multicast service sent by the second network device if the second network device supports the receiving of the multicast service by the terminal device in the inactive state.

In a possible design, the receiving module 1001 is further configured to:
receive second configuration information sent by the second network device, where the second configuration information is configuration information dedicated to the second network device.

In a possible design, the receiving module 1001 is further configured to:
receive, based on the target configuration information and the second configuration information, the first multicast service sent by the second network device.

The apparatus provided in this embodiment may be configured to execute the technical solutions of the foregoing method embodiments. The implementation principles and technical effects thereof are similar, and details are not described again in this embodiment.

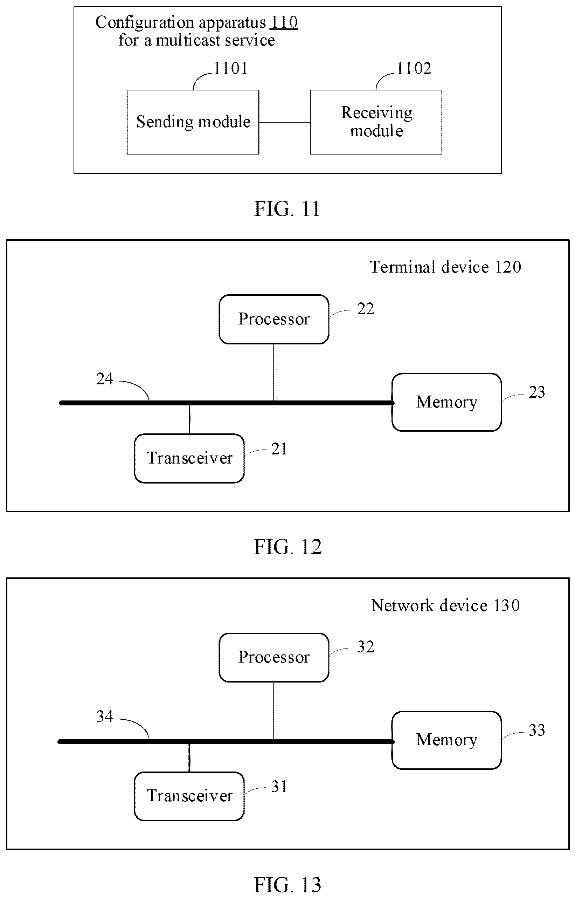

FIG. 11 is a schematic structural diagram II of a configuration apparatus for a multicast service according to an embodiment of this application. As shown in FIG. 11, the apparatus 110 includes a sending module 1101 and a receiving module 1102.

The sending module 1101 is configured to send a first message to a terminal device, where the first message includes at least one set of first configuration information for transmission of a first multicast service; and
the first message includes at least first configuration information for transmission of the first multicast service by a second network device.

In a possible design, each first multicast service corresponds to at least one set of first configuration information.

In a possible design, the first multicast service corresponds to one set of first configuration information, and each set of first configuration information is associated with a service identifier of a corresponding first multicast service.

In a possible design, the first multicast service corresponds to a plurality of sets of first configuration information, and each set of first configuration information is associated with a respective configuration information identifier.

In a possible design, the first message further includes indication information corresponding to the at least one set of first configuration information, and the indication information is used to indicate whether the first configuration information is allowed to be used in a neighboring cell of the first network device.

In a possible design, the indication information includes a cell list, and the cell list includes cell identifiers supporting the first configuration information.

In a possible design, the sending module 1101 is further configured to:
broadcast first information, where the first information is used to indicate whether the first network device supports a terminal device in an inactive state in receiving a multicast service.

In a possible design, the sending module 1101 is further configured to:
broadcast second configuration information, where the second configuration information is configuration information dedicated to the first network device.

In a possible design, the apparatus further includes a receiving module 1102.

The receiving module 1102 is configured to:
receive a second message sent by the second network device, where the second message includes at least one set of first configuration information for transmission of a second multicast service by the second network device.

In a possible design, the sending module 1101 is further configured to:
send a third message to a second network device, where the third message includes at least one set of first configuration information for transmission of a third multicast service by the first network device.

The apparatus provided in this embodiment may be configured to execute the technical solutions of the foregoing method embodiments. The implementation principles and technical effects thereof are similar, and details are not described again in this embodiment.

The configuration method for a multicast service provided in embodiments of this application may be applied to an electronic device having a communication function. The electronic device includes a terminal device. For a specific device form and the like of the terminal device, reference may be made to the foregoing related descriptions. Details are not described herein again.

FIG. 12 is a schematic structural diagram of a terminal device according to an embodiment of this application. Referring to FIG. 12, a terminal device 120 may include a transceiver 21, a memory 22, and a processor 23. The transceiver 21 may include a transmitter and/or a receiver. The transmitter may further be referred to as a similar description such as a sender, a sending set, a sending port, or a sending interface. The receiver may further be referred to as a similar description such as a receiver, a receiving set, a receiving port, or a receiving interface. For example, the transceiver 21, the memory 22, and the processor 23 are connected to each other through a bus 24.

The memory 22 is configured to store a program instruction. The processor 23 is configured to execute the program instruction stored in the memory, so as to enable the terminal device 120 to perform the configuration method for a multicast service in any one of the foregoing embodiments. The receiver of the transceiver 21 may be configured to perform a receiving function of the terminal device in the foregoing configuration method for a multicast service.

FIG. 13 is a schematic structural diagram of a network device according to an embodiment of this application. Referring to FIG. 13, a network device 130 may include a transceiver 31, a memory 32, and a processor 33. The transceiver 31 may include a transmitter and/or a receiver. The transmitter may further be referred to as a similar description such as a sender, a sending set, a sending port, or a sending interface. The receiver may further be referred to as a similar description such as a receiver, a receiving set, a receiving port, or a receiving interface. For example, the transceiver 31, the memory 32, and the processor 33 are connected to each other through a bus 34.

The memory 32 is configured to store a program instruction. The processor 33 is configured to execute the program instruction stored in the memory, so as to enable the network device 130 to perform the configuration method for a multicast service in any one of the foregoing embodiments. The receiver of the transceiver 31 may be configured to perform a receiving function of the network device in the foregoing configuration method for a multicast service.

An embodiment of this application provides a chip. The chip includes a processor. The processor is configured to invoke a computer program in a memory, to perform the technical solutions in the foregoing embodiments. The implementation principles and technical effects thereof are similar to those in the foregoing related embodiments. Details are not described herein again.

An embodiment of this application further provides a computer-readable storage medium. The computer-readable storage medium stores a computer program. When the computer program is executed by the processor, the foregoing method is implemented. All or some of methods in the foregoing embodiments may be implemented through software, hardware, firmware, or any combination thereof. If implemented in software, a function may be stored on a computer-readable medium or transmitted on the computer-readable medium as one or more instructions or code. The computer-readable medium may include a computer storage medium and a communication medium, and may further include any medium that may transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source through a coaxial cable, an optical fiber cable, a twisted pair, a digital subscriber line (Digital Subscriber Line, DSL) or wireless technologies (such as infrared, radio, and microwave), the coaxial cable, the optical fiber cable, the twisted pair, the DSL, or the wireless technologies such as the infrared, the radio, and the microwave are included in the definition of the medium. The magnetic disk and the optical disc used herein include a compact disc, a laser disc, an optical disc, a digital versatile disc (Digital Versatile Disc, DVD), a floppy disk, and a Blu-ray disc. The magnetic disk generally reproduces data in a magnetic manner, and the optical disc reproduces data optically by using a laser. The foregoing combination should also be included in the scope of the computer-readable medium.

An embodiment of this application provides a computer program product. The computer program product includes a computer program. The computer program, when run, causes a computer to perform the foregoing method.

Embodiments of this application are described with reference to the flowcharts and/or block diagrams of the method, the device (system), and the computer program product according to embodiments of this application. It should be understood that computer program instructions can implement each process and/or block in the flowcharts and/or block diagrams and a combination of processes and/or blocks in the flowcharts and/or block diagrams. The computer program instructions may be provided for a general-purpose computer, a dedicated computer, an embedded processor, or a processing unit of another programmable device to generate a machine, so that the instructions executed by a computer or a processing unit of another programmable data processing device generate an apparatus for implementing a specific function in one or more processes in the flowcharts and/or in one or more blocks in the block diagrams.

In the foregoing specific implementations, the objectives, technical solutions, and beneficial effects of the present invention are further described in detail. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A configuration method for a multicast service, applied to a terminal device, the method comprising:
receiving a first message sent by a first network device, where the first message includes at least one set of first configuration information for transmission of a first multicast service; and
receiving, based on the first message in an inactive state, the first multicast service sent by a second network device.

2. The method according to claim 1, wherein each first multicast service corresponds to at least one set of first configuration information.

3. The method according to claim 2, wherein the first multicast service corresponds to one set of first configuration information, and each set of first configuration information is associated with a service identifier of a corresponding first multicast service.

4. The method according to claim 2, wherein the first multicast service corresponds to a plurality of sets of first configuration information, and each set of first configuration information is associated with a respective configuration information identifier.

5. The method according to any one of claims 1 to 4, wherein the first message further comprises indication information corresponding to the at least one set of first configuration information, and the indication information is used to indicate whether the first configuration information is allowed to be used in a neighboring cell of the first network device.

6. The method according to claim 5, wherein the indication information comprises a cell list, and the cell list comprises cell identifiers supporting the first configuration information.

7. The method according to any one of claims 1 to 6, wherein the receiving, based on the first message, the first multicast service sent by a second network device comprises:
determining target configuration information in at least one set of first configuration information included in the first message, where the target configuration information is first configuration information supported by the second network device for transmission of a first multicast service; and
receiving, based on the target configuration information, the first multicast service sent by the second network device.

8. The method according to claim 7, wherein the receiving, based on the target configuration information, the first multicast service sent by the second network device comprises:
receiving first information sent by the second network device, wherein the first information is used to indicate whether the second network device supports a terminal device in an inactive state in receiving a multicast service; and
receiving, based on the target configuration information, the first multicast service sent by the second network device if the second network device supports the receiving of the multicast service by the terminal device in the inactive state.

9. The method according to any one of claims 6 to 8, further comprising:
receiving second configuration information sent by the second network device, wherein the second configuration information is configuration information dedicated to the second network device.

10. The method according to any one of claims 7 to 9, wherein the receiving, based on the target configuration information, the first multicast service sent by the second network device comprises:
receiving, based on the target configuration information and the second configuration information, the first multicast service sent by the second network device.

11. A configuration method for a multicast service, applied to a first network device, the method comprising:
sending a first message to a terminal device, where the first message includes at least one set of first configuration information for transmission of a first multicast service; and
the first message includes at least first configuration information for transmission of the first multicast service by a second network device.

12. The method according to claim 11, wherein each first multicast service corresponds to at least one set of first configuration information.

13. The method according to claim 12, wherein the first multicast service corresponds to one set of first configuration information, and each set of first configuration information is associated with a service identifier of a corresponding first multicast service.

14. The method according to claim 12, wherein the first multicast service corresponds to a plurality of sets of first configuration information, and each set of first configuration information is associated with a respective configuration information identifier.

15. The method according to any one of claims 11 to 14, wherein the first message further comprises indication information corresponding to the at least one set of first configuration information, and the indication information is used to indicate whether the first configuration information is allowed to be used in a neighboring cell of the first network device.

16. The method according to claim 15, wherein the indication information comprises a cell list, and the cell list comprises cell identifiers supporting the first configuration information.

17. The method according to any one of claims 11 to 16, further comprising:
broadcasting first information, wherein the first information is used to indicate whether the first network device supports a terminal device in an inactive state in receiving a multicast service.

18. The method according to claim 17, further comprising:
broadcasting second configuration information, wherein the second configuration information is configuration information dedicated to the first network device.

19. The method according to any one of claims 11 to 18, further comprising:
receiving a second message sent by the second network device, where the second message includes at least one set of first configuration information for transmission of a second multicast service by the second network device.

20. The method according to any one of claims 11 to 19, further comprising:
sending a third message to a second network device, wherein the third message comprises at least one set of first configuration information for transmission of a third multicast service by the first network device.

21. A configuration apparatus for a multicast service, comprising:
a receiving module, configured to receive a first message sent by a first network device, wherein the first message comprises at least one set of first configuration information for transmission of a first multicast service; and
the receiving module is further configured to receive, based on the first message in an inactive state, the first multicast service sent by a second network device.

22. A configuration apparatus for a multicast service, comprising:
a sending module, configured to send a first message to a terminal device, wherein the first message comprises at least one set of first configuration information for transmission of a first multicast service; and
the first message includes at least first configuration information for transmission of the first multicast service by a second network device.

23. A terminal device, comprising: a processor and a memory, wherein
the memory stores a computer-executable instruction; and
the processor executes the computer-executable instruction stored in the memory, so that the terminal device performs the method according to any one of claims 1 to 10.

24. A network device, comprising: a processor and a memory, wherein
the memory stores a computer-executable instruction; and
the processor executes the computer-executable instruction stored in the memory, so that the network device performs the method according to any one of claims 11 to 20.

25. A computer-readable storage medium, storing a computer program, wherein when the computer program is executed by a processor, the method according to any one of claims 1 to 20 is implemented.

26. A computer program product, comprising a computer program, the computer program, when run, causing a computer to perform the method according to any one of claims 1 to 20.
